# EUROPÄISCHE PATENTSCHRIFT

(11) **EP 0 999 082 B1**
(45) Veröffentlichungstag und Bekanntmachung des Hinweises auf die Patenterteilung: **25.02.2004**
(21) Anmeldenummer: 99121312.5
(22) Anmeldetag: 26.10.1999
(51) Int. Cl.: B60K 15/04, B60K 15/035

(54) **Einfüllstutzen für einen Kraftstoffbehälter eines Kraftfahrzeuges**
Inlet for a fuel tank for an automotive vehicle
Pipe de remplissage de réservoir de carburant pour véhicule automobile [1987/23]

(30) Priorität: 05.11.1998 DE 19850904
(43) Veröffentlichungstag der Anmeldung: 10.05.2000
(73) Patentinhaber: Siemens Aktiengesellschaft, 80333 München (DE)
(72) Erfinder: Löw, Peter Andreas, 64380 Rossdorf (DE); Kochsmeier, Christian, 44137 Dortmund (DE); Zapp, Thomas, Dr., 44265 Dortmund (DE); Pfahl, Wolfgang, 65719 Hofheim (DE)

(56) Entgegenhaltungen:
- EP-A- 0 751 024
- DE-A- 19 605 922
- US-A- 3 129 014
- US-A- 4 934 417
- US-A- 5 375 633

## Beschreibung

Gegenstand der Erfindung ist ein Einfüllstutzen für einen Kraftstoffbehälter eines Kraftfahrzeugs, mit zusätzlich zum Einfüllrohr angeordneten Entlüftungsleitungen und Ventilen.

Einfüllstutzen für Kraftstoffbehälter von Kraftfahrzeugen sind allgemein bekannt. Neben dem eigentlichen Einfüllrohr zur Einleitung von Kraftstoff in den Kraftstoffbehälter verfügen heutige Einfüllstutzen über zusätzliche Leitungen und Ausgleichsbehälter zur Entlüftung des Kraftstoffbehälters während des Betankens und des Betriebs des Kraftfahrzeugs. Des weiteren besitzen Einfüllstutzen vielfach Ventile, wie z. B. Roll-Over-Ventil, Schaltventile und Sicherheitsventile.

Es ist bekannt, Einfüllrohre für Kraftstoffbehälter nach dem Blasformverfahren herzustellen und die Entlüftungsleitungen und die Ventile anschließend mit dem Einfüllrohr zum Einfüllstutzen zu montieren. Dazu sind die Entlüftungsleitungen zu verlegen und mit dem Einfüllrohr zu verbinden. Die erforderlichen Ventile müssen ebenfalls mit den entsprechenden Leitungen verbunden werden. Ein derartiger Einfüllstutzen besitzt eine Vielzahl von Einzelteilen und Verbindungen und erfordert deshalb einen hohen Montageaufwand. Besonders nachteilig ist außerdem die hohe Kraftstoffpermeation aufgrund der Verbindungen am Einfüllstutzen.

Es ist weiterhin bekannt, Entlüftungsleitungen mit dem Einfüllrohr im Blasformverfahren einteilig herzustellen, wobei die Entlüftungsleitungen nur am Umfang mit dem Einfüllrohr und separat mit Ventilen oder mit dem Kraftstoffbehälter verbunden sind. Auch in dieser Ausgestaltung besitzen Einfüllstutzen noch hohe Permeationswerte. Schließlich ist auch die Montage der Ventile durch die schlechte Zugänglichkeit aufwendig, wenn sie nachträglich in das blasgeformte Einfüllrohr eingebaut werden.

Eine verbesserte Montage gestattet ein Einfüllrohr, daß durch Spritzgießen zweier Halbschalen hergestellt ist. In dieser Ausgestaltung läßt sich ein Ventil in die Halbschalen montieren, bevor diese miteinander verschweißt werden.

Die US-A-5 375 633 offenbart einem Einfüllstutzen mit einen gewölbten schalenförmingen Deckel und einem Gehause.

Der Erfindung liegt die Aufgabe zugrunde, einen leicht montierbaren Einfüllstutzen zu schaffen, der niedrige Permeationswerte aufweist.

Gelöst wird die Aufgabe mit den Merkmalen des Anspruchs 1. Vorteilhafte Ausgestaltungen sind in den Ansprüchen 2-14 beschrieben.

Der erfindungsgemäße Einfüllstutzen besteht aus mindestens zwei miteinander verbundenen, spritzgegossenen Halbschalen, wobei jede Halbschalen mehrere gewölbte Bereiche besitzt. Im verbundenen Zustand ergeben diese gewölbten Bereiche einzelne Kammern des Einfüllstutzens. Diese Kammem bilden das Einfüllrohr, die Betriebsentlüftungs-, die Tankentlüftungsleitung oder weitere Leitungen des Einfüllstutzens. Weiterhin ist mindestens eine Kammer, vorzugsweise die das Einfüllrohr bildende Kammer, zur Verbindung mit einem anderen Bauteil, insbesondere dem Kraftstoffbehälter, ausgebildet. Des weiteren sind in den gewölbten Bereichen der Halbschalen Aufnahmen angeformt, um Bauelemente in dem Einfüllstutzen anzuordnen.

Der wesentlichste Vorteil dieses Einfüllstutzens besteht darin, daß nunmehr alle Leitungen, Ventile und sonstige Bauelemente in den Halbschalen angeordnet sind. Damit besitzt der Einfüllstutzen außer der Verbindung zum Kraftstoffbehälter keine weiteren Verbindungsstellen, so daß sehr niedrige Permeationswerte erreicht werden. Weiterhin ermöglicht dieser Einfüllstutzen eine sehr einfache Montage, da sich die Bauelemente, z. B. Roll-Over-Ventil, Rückschwallventil, Entlüftungsventil, in den einzelnen Halbschalen vor dem Fügen montieren lassen.

In vorteilhafter Weise sind die Halbschalen des Einfüllstutzens miteinander verschweißt. Es sind aber auch alle anderen Verbindungen denkbar, die zu einem dauerhaften und dichten Verbund der Halbschalen führen. Dabei läßt sich der erfindungsgemäße Einfüllstutzen besonders leicht herstellen, wenn die Habschalen an ihren Stirnseiten miteinander verbunden werden. Besonders einfach lassen sich die Halbschalen verbinden, wenn alle Stirnseiten in einer Ebene liegen.

In einer anderen Ausgestaltung liegen nicht alle Stirnseiten in einer Ebene. Es kann vorteilhaft sein, eine oder mehrere Stirnseiten einer Halbschale aus der Ebene der anderen Stirnseiten überhöht auszubilden, so daß diese überhöhen Stirnseiten beim Verbinden mit der anderen Halbschale in einen gewölbten Bereich der anderen Halbschale reicht. Dadurch wird erreicht, daß beim Verschweißen der Halbschalen diese überhöhte Stirnseite den gewölbten Bereich der anderen Halbschale in zwei Kammern unterteilt.

Weiterhin kann es in Abhängigkeit von der Geometrie des Einfüllstutzens vorteilhaft sein, wenn der Einfüllstutzen aus drei oder mehr Halbschalen gebildet wird. Dadurch sind die Halbschalen trotz einer komplizierten Form des Einfüllstutzens mit relativ einfachen Formwerkzeugen herstellbar.

Es ist vorteilhaft, wenn an den Halbschalen Verbindungs- und Rastelemente angeformt sind. Mittels dieser lassen sich die Bauelemente besonders einfach in den Halbschalen fixieren. Somit werden zusätzliche Befestigungsmittel für die Bauelemente eingespart.

In einer vorteilhaften Ausgestaltung baut der Einfüllstutzen besonders klen, wenn die Entlüftungsleitungen nicht als Kammem sondern mit dem Gasinnendruckverfahren (GID) erzeugt, in den Halbschalen ausgebildet sind. Dazu wird bei der Herstellung der Halbschalen in einem Bereich des plastifizierten Kunststoffs ein Gas injiziert, daß durch seinen Druck das Kunststoffmaterial ausbläst und so einen Hohlraum schafft, der die spätere Leitung bildet. Diese GID-Leitungen können ihrerseits wieder in eine Kammer münden. So lassen sich die Entlüftungsleitungen besonders einfach beispielsweise in der Wand der das Einfüllrohr bildenden Kammer anordnen.

In einer weiteren vorteilhaften Ausgestaltung münden diese GlD-Leitungen einerseits in das Einfüllrohr, während sie mit ihrem anderen Ende in weitere Kammern münden, in denen beispielsweise Ventile angeordnet sind. Der Vorteil dieser Ausgestaltung besteht darin, daß die Entlüftungsleitungen aus dem Kraftstoffbehälter durch den unteren Bereich des Einfüllrohrs geführt werden und dann mit den entsprechenden GID-Leitungen verbunden werden. Somit benötigt der erfindungsgemäße Einfüllstutzen nur eine Verbindungsstelle zum Kraftstoffbehälter, was ebenfalls zu einer deutlichen Verminderung der Permeation beiträgt.

In einer weiteren vorteilhaften Ausgestaltung ist ein Filter für die durch die Entlüftungsleitungen abzuführenden Gase in den Einfüllstutzen integriert. Der Einfüllstutzen besitzt dazu eine weitere Leitung, die von den Enbüftungsleitungen zu einem Bereich führt, in dem das Filter, vorzugsweise ein Aktivkohlefilter, angeordnet ist. Das Filter kann dabei an einer beliebigen Stelle des Einfüllstutzens angeordnet sein. Über ein ebenfalls im Einfüllstutzen angeordnetes Absperrventil, welches für die Leckdiagnose zur Überprüfung der Tankdichtheit angeordnet ist, werden die gereinigten Gase an die Atmosphäre geleitet.

In einer anderen Ausgestaltung bildet eine Kammer in den Halbschalen das Filtergehäuse, so daß in diese Kammer nur noch das Filtermaterial angeordnet werden muß. Das Filter ist damit optimaler an die vorhandene Geometrie des Kraftfahrzeuges anpaßbar und es wird kein Platz für eine separate Anordnung des Filters benötigt. Ebenso entfällt die Leitung zum Filter. Die Anordnung des Filters im Einfüllstutzen trägt ebenfalls zur Verringerung der Permeation bei.

Ebenso ist es vorteilhaft statt der Aufnahmen für die Ventile Teile der Ventile, z. B. Gehäuse und Ventilsitz, in den Halbschalen anzuordnen, indem diese Teile an die Halbschalen angespritzt sind.

An einem Ausführungsbeispiel wird die Erfindung näher erläutert. Die dazugehörigen Figuren zeigen in
- Fig. 1: schematisch einen Halbschnitt durch einen erfindungsgemäßen Einfüllstutzens.
- Fig. 2: einen Schnitt durch den Einfüllstutzen entlang der Linie II-II

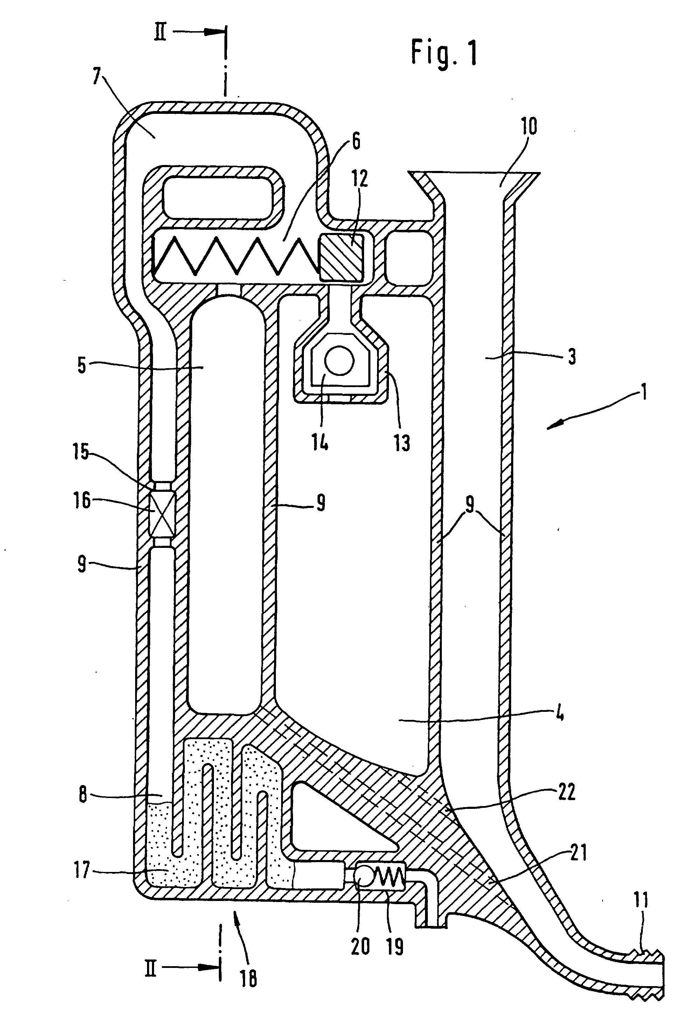

Figur 1 zeigt einen aus zwei Halbschalen bestehenden Einfüllstutzen. Die Halbschale 1 besteht aus mehreren in die Zeichenebene gewölbten Bereichen 3 - 8, die durch Stirnseiten 9 besitzende Wandabschnitte voneinander getrennt sind. Durch Verschweißen der beiden Halbschalen 1, 2 entsteht aus dem Bereich 3 und dem entsprechenden Bereich der anderen Halbschale eine Kammer, die das Einfüllrohr zum Einfüllen von Kraftstoff in den Kraftstoffbehälter bildet. An dem einen Ende 10 wird der Einfüllstutzen an der Karosserie des Kraftfahrzeugs und mit dem anderen Ende 11 an dem Kraftstoffbehälter befestigt. Der Bereich 4 bildet die Betriebsentlüftung und der Bereich 5 die Betankungsentlüftung. In einem weiteren Bereich 6 ist ein Umschaltventil 12 angeordnet, daß je nach Betriebsart die Betriebsentlüftung öffnet und die Betankungsentlüftung verschließt bzw. umgekehrt. Am oberen Ende der Betriebsentlüftung ist in der Halbschale 1 eine Aufnahme 13 für ein Roll-Over-Ventil 14 angeformt. Ein Bereich 7 bildet eine weitere Leitung, durch die Gase in einen unteren Bereich 8 der Halbschale 1 geleitet werden. Der Bereich 7 weist ebenfalls eine Aufnahme 15 für ein Schutzventil 16 auf, welches den Tank vor unzulässig hohem Über- bzw. Unterdruck sichert. Der untere Bereich 8 ist mäanderförmig ausgebildet und mit Aktivkohle 17 gefüllt. Dieser Bereich 8 des Einfüllstutzens bildet somit ein Filter 18, wobei der untere Bereich 8 gleichzeitig das Filtergehäuse ist. Durch die Ausbildung des Bereichs 7 über das Ende 10 des Einfüllrohrs wird zusätzlich vermieden, daß Kraftstoff in das Filter 18 gelangen kann. Im weiteren Verlauf ist in einer letzen an die Halbschale 1 angeformten Aufnahme 19 ein Absperrventil 20 angeordnet, um das Tanksystem bei der Leckdiagnose gegen Atmosphäre abzuschließen. In die unteren Teile der Bereiche 4, 5 mündet jeweils eine GID-Leitung 21, 22, die in direkter Verbindung mit den Entlüftungsleitungen im Tank stehen. Die GID-Leitungen 21, 22 sind an ihrem in den Bereich 3 mündenden Ende so ausgebildet, daß sie aus dem Kraftstoffbehälter herausgeführte Entlüftungsleitungen aufnehmen können.

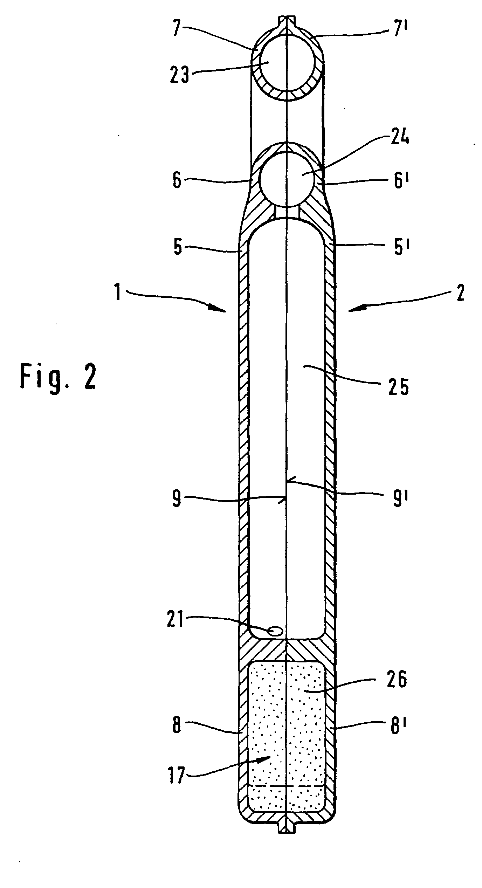

Fig. 2 zeigt den aus den Halbschalen 1, 2 bestehenden Einfüllstutzen. Die Halbschalen 1, 2 sind an ihren Stirnseiten 9, 9' miteinander verschweißt. Die gewölbten Bereiche 7, 7' der Halbschalen 1, 2 bilden eine Kammer 23, die die Gase aus dem Kraftstoffbehälter zum Filter leitet. Die gewölbten Bereiche 6, 6' bilden die Kammer 24, in der das Umschaltventil 12 angeordnet ist. Daran schließt eine aus den Bereichen 5, 5' gebildete Kammer 25 für die Betankungsentlüftung an. In den Bereich 5 der Halbschale 1 mündet im unteren Teil der Kammer 25 die GID-Leitung 21. Durch einen Wandbereich getrennt, ist unterhalb eine Kammer 26 aus den Bereichen 8, 8' gebildet, die mit Filtermaterial 17 gefüllt ist.

Unabhängig von dieser speziellen Ausgestaltung umfaßt die Erfindung auch alle weiteren Formen von Einfüllstutzen, die sich in Abhängigkeit von den Platzverhältnissen in einem Kraftfahrzeug für einen derartigen Einfüllstutzen ergeben.

## Patentansprüche

1. Einfüllstutzen für einen Kraftstoffbehälter eines Kraftfahrzeugs, bestehend aus einem Einfüllrohr, Entlüftungsleitungen und Ventilen, wobei der Einfüllstutzen aus mindestens zwei miteinander verbundenen, spritzgegossenen Halbschalen (1, 2) gebildet ist, wobei die Halbschalen (1, 2) gewölbte Bereiche (3 - 8) aufweisen, die im gefügten Zustand der Halbschalen (1, 2) einzelne Kammern (23 - 25) bilden, wobei mindestens eine Kammer (23 - 25) zur Verbindung mit dem Kraftstoffbehälter ausgebildet ist und wobei in den Halbschalen (1, 2) Aufnahmen (13, 15, 19) für Bauelemente (14, 16, 20) angeformt sind.

2. Einfüllstutzen nach Anspruch 1, **dadurch gekennzeichnet, daß** die Halbschalen (1, 2) an ihren Stirnseiten (9) miteinander verbunden sind.

3. Einfüllstutzen nach Anspruch 1 und 2, **dadurch gekennzeichnet, daß** die Stirnseiten (9) in einer Ebene angeordnet sind.

4. Einfüllstutzen nach Anspruch 1 und 2, **dadurch gekennzeichnet, daß** die Stirnseiten (9) in mehreren Ebenen angeordnet sind.

5. Einfüllstutzen nach Anspruch 1, **dadurch gekennzeichnet, daß** die Halbschalen (1, 2) derart miteinander verbunden sind, daß eine Stirnseite (9) mit einem der gewölbten Bereiche (3 - 8) verbunden ist.

6. Einfüllstutzen nach mindestens einem der Ansprüche 1 bis 5, **dadurch gekennzeichnet, daß** der Einfüllstutzen zum Verbinden der Halbschalen (1, 2) eine Schweißverbindung besitzt.

7. Einfüllstutzen nach mindestens einem der Ansprüche 1 bis 6, **dadurch gekennzeichnet, daß** zum Verbinden der Halbschalen (1, 2) Rast- und Verbindungselemente, vorzugsweise Klipselemente, an den Halbschalen (1, 2) angeformt sind.

8. Einfüllstutzen nach mindestens einem der Ansprüche 1 bis 7, **dadurch gekennzeichnet, daß** die Stirnseiten (9) der Halbschalen (1, 2) Ausnehmungen besitzen, über die einzelne Kammern (23 - 25) miteinander in Verbindung stehen.

9. Einfüllstutzen nach mindestens einem der Ansprüche 1 bis 8, **dadurch gekennzeichnet, daß** in den Halbschalen (1, 2) Leitungen (21, 22), die nach dem Gasinnendurckverfahren hergestellt sind, angeordnet sind.

10. Einfüllstutzen nach mindestens einem der Ansprüche 1 bis 9, **dadurch gekennzeichnet, daß** in die Kammern (23 - 25) Leitungen (21, 22) münden, die nach dem Gasinnendurckverfahren hergestellt sind.

11. Einfüllstutzen nach mindestens einem der Ansprüche 1 bis 10, **dadurch gekennzeichnet, daß** die Leitungen (21, 22), die nach dem Gasinnendurckverfahren hergestellt sind, in die das Einfüllrohr bildende Kammer münden.

12. Einfüllstutzen nach mindestens einem der Ansprüche 1 bis 11, **dadurch gekennzeichnet, daß** die Kammern (23 - 25) oder Teile davon als Gehäuse für Bauelemente (14, 16, 18, 20) ausgebildet sind.

13. Einfüllstutzen nach Anspruch 12, **dadurch gekennzeichnet, daß** eine Kammer (25) das Gehäuse für ein Filter (18) ist.

14. Einfüllstutzen nach Anspruch 13, **dadurch gekennzeichnet, daß** das Filter (18) ein Aktivkohlefilter ist.

## Claims

1. Filler neck for a fuel tank of a motor vehicle, consisting of a filler pipe, vent lines and valves, the filler neck being formed from at least two interconnected injection-moulded half shells (1, 2), the half shells (1, 2) having outwardly curved regions (3 - 8) which form individual chambers (23 - 25) when the half shells (1, 2) are in the assembled state, at least one chamber (23-25) being designed for connection to the fuel tank, and receptacles (13, 15, 19) for structural elements (14, 16, 20) being integrally formed in the half shells (1, 2).

2. Filler neck according to Claim 1, **characterized in that** the half shells (1, 2) are connected to one another on their end faces (9).

3. Filler neck according to Claims 1 and 2, **characterized in that** the end faces (9) are arranged in one plane.

4. Filler neck according to Claims 1 and 2, **characterized in that** the end faces (9) are arranged in a plurality of planes.

5. Filler neck according to Claim 1, **characterized in that** the half shells (1, 2) are connected to one another in such a way that one end face (9) is connected to one of the outwardly curved regions (3 - 8).

6. Filler neck according to at least one of Claims 1 to 5, **characterized in that** the filler neck possesses a welded joint for connecting the half shells (1, 2).

7. Filler neck according to at least one of Claims 1 to 6, **characterized in that** catching and connecting elements, preferably snap elements, for connecting the half shells (1, 2) are integrally formed on these.

8. Filler neck according to at least one of Claims 1 to 7, **characterized in that** the end faces (9) of the half shells (1, 2) possess recesses, via which individual chambers (23 - 25) are connected to one another.

9. Filler neck according to at least one of Claims 1 to 8, **characterized in that** lines (21, 22) which are produced by the gas internal pressure method are arranged in the half shells (1, 2).

10. Filler neck according to at least one of Claims 1 to 9, **characterized in that** lines (21, 22) which are produced by the gas internal pressure method open into the chambers (23 - 25).

11. Filler neck according to at least one of Claims 1 to 10, **characterized in that** the lines (21, 22) produced by the gas internal pressure method open into the chamber forming the filler pipe.

12. Filler neck according to at least one of Claims 1 to 11, **characterized in that** the chambers (23-25) or parts of these are designed as housing for structural elements (14, 16, 18, 20).

13. Filler neck according to Claim 12, **characterized in that** one chamber (25) is the housing for a filter (18).

14. Filler neck according to Claim 13, **characterized in that** the filter (18) is an activated charcoal filter.

## Revendications

1. Pipe de remplissage du réservoir à carburant d'un véhicule automobile, constitué d'un tube de remplissage, de conduites de mise à l'air et de valves, la pipe de remplissage étant formée par au moins deux demi-coques moulées par injection (1, 2), les deux demi-coques (1, 2) présentant des zones bombées (3-8), qui lorsque les deux demi-coques (1, 2) sont assemblées forment des cellules individuelles (23-25), au moins une cellule (23-25) étant conçue pour être raccordée sur le réservoir à carburant et des systèmes de réception (13, 15, 19) pour des éléments constitutifs (14, 16, 20) étant formés par moulage dans les demi-coques (1,2).

2. Pipe de remplissage selon la revendication 1, **caractérisée en ce que** les demi-coques (1, 2) sont reliées entre elles par l'intermédiaire de leurs faces frontales (9).

3. Pipe de remplissage selon l'une quelconque des revendications 1 et 2, **caractérisée en ce que** les faces frontales (9) sont disposées sur un même plan.

4. Pipe de remplissage selon l'une quelconque des revendications 1 et 2, **caractérisée en ce que** les faces frontales (9) sont disposées sur plusieurs plans.

5. Pipe de remplissage selon la revendication 1, **caractérisée en ce que** les demi-coques (1, 2) sont assemblées l'une avec l'autre de manière à ce qu'une face frontale (9) soit reliée avec l'une des zones bombées (3 - 8).

6. Pipe de remplissage selon au moins l'une quelconque des revendications 1 à 5, **caractérisée en ce que** la pipe de remplissage est munie d'une liaison par soudure, pour l'assemblage des demi-coques (1, 2).

7. Pipe de remplissage selon au moins l'une quelconque des revendications 1 à 6, **caractérisée en ce que** pour l'assemblage des demi-coques (1, 2) des crans d'arrêt et des éléments de liaison, de préférence des clips sont moulés par formage sur les demi-coques (1, 2).

8. Pipe de remplissage selon au moins l'une quelconque des revendications 1 à 7, **caractérisée en ce que** les faces frontales (9) des demi-coques (1, 2) sont munies d'évidements, par l'intermédiaire desquels, les cellules (23 à 25) sont reliées entre elles.

9. Pipe de remplissage selon au moins l'une quelconque des revendications 1 à 8, **caractérisée en ce que** des conduites (21, 22), fabriquées selon le procédé de pression interne de gaz, sont disposées dans les demi-coques (1, 2).

10. Pipe de remplissage selon au moins l'une quelconque des revendications 1 à 9, **caractérisée en ce que** des conduites (21, 22), fabriquées selon le procédé de pression interne de gaz, débouchent dans les cellules (23-25).

11. Pipe de remplissage selon au moins l'une quelconque des revendications 1 à 10, **caractérisée en ce que** des conduites (21, 22), fabriquées selon le procédé de pression interne de gaz, débouchent dans la cellule formant la pipe de remplissage.

12. Pipe de remplissage selon au moins l'une quelconque des revendications 1 à 11, **caractérisée en ce que** les cellules (23-25) ou des pièces desdites cellules sont constituées sous forme d'un boîtier destiné aux éléments constitutifs (14, 16, 18, 20).

13. Pipe de remplissage selon la revendication 12, **caractérisée en ce que** l'une des cellules (25) forme le boîtier pour le filtre (18).

14. Pipe de remplissage selon la revendication 13, **caractérisée en ce que** le filtre (18) est un filtre au charbon actif.
